# EUROPÄISCHE PATENTSCHRIFT

(11) **EP 0 414 043 B1**
(45) Veröffentlichungstag und Bekanntmachung des Hinweises auf die Patenterteilung: **01.12.1993**
(21) Anmeldenummer: 90115185.2
(22) Anmeldetag: 07.08.1990
(51) Int. Cl.: H04Q 1/14

(54) **Verteilerleiste für eine Telekommunkationsanlage**
Distribution block for a telecommunication installation
Bloc de distribution pour une installation de télécommunication

(30) Priorität: 21.08.1989 DE 3927573
(43) Veröffentlichungstag der Anmeldung: 27.02.1991
(73) Patentinhaber: SIEMENS AKTIENGESELLSCHAFT, 80333 München (DE)
(72) Erfinder: Steiner, Ewald, Dipl-Ing., (FH), D-8137 Berg 3 (DE); Thalhammer, Erich, Dipl.-Ing. (FH), D-8000 München 13 (DE)

(56) Entgegenhaltungen:
- EP-A- 0 272 200
- EP-A- 0 302 814
- EP-A- 0 321 743
- DE-A- 3 509 523

## Beschreibung

Die Erfindung bezieht sich auf eine Verteilerleiste für eine Telekommunikations-, insbesondere Fernsprechanlage, wobei die längliche Verteilerleiste mit in der Längsrichtung aneinandergereihten Kontaktteilen versehen ist, die paarweise entlang der Längsseiten der Verteilerleiste gegenüberliegende Schneidklemmen für ankommende und abgehende Leitungen aufweisen.

Eine derartige Verteilerleiste ist z. B. durch die DE 35 09 523 Al bekannt geworden. Danach sind die Kontaktteile mit Kontaktstellen für Schutzstecker und Trenn- oder Prüfstecker versehen. Die Kontaktteile können ein- oder zweistückig ausgebildet sein. Die zweistückige Ausführung weist Kontaktfedern auf, die trennbar federnd aneinanderliegen. Die Kontaktstellen und Schneidklemmen sind alle von der Bedienungsseite her zugänglich. Die Schneidklemmen für die häufig zu ändernden abgehenden Rangierleitungen sind so hoch über der Rückseite der Verteilerleiste angeordnet, daß sie einen eingesteckten Schutzstecker überragen. Die Kontaktteile erstrecken sich daher im wesentlichen in der Steckrichtung. Die Kontaktteile sind im wesentlichen durch Verbiegen im erforderlichen Verlauf angepaßt und zwischen zwei Gehäuseteilen der Verteilerleiste geführt und gehalten. Dabei liegen die Trennkontaktstellen ungefähr in halber Höhe zwischen den Kontaktstellen für die Schutzstecker und den Schneidklemmen für die Rangierleitungen.

Der Erfindung liegt die Aufgabe zugrunde, die Abmessungen der Verteilerleiste zu verringern und die Herstellung zu vereinfachen.

Diese Aufgabe wird durch die Erfindung gemäß Anspruch 1 gelöst.

Da sich die Materialebenen der Kontaktteile alle in der Bedienungsrichtung erstrecken, kann die Grundform der Kontaktteile im wesentlichen durch einen Schneid-Stanzvorgang erzeugt werden. Die Basis der Kontaktteile erstreckt sich quer zur Längsrichtung. Die Schneidklemmen werden durch einfaches Abwinkeln der Basis in die Längsrichtung abgebogen. Auch die Federschenkel des Trennkontakts können in der gleichen Weise abgebogen werden, so daß sich zwei hinreichend nachgiebige Kontaktfedern ergeben. Da die Federschenkel von der Basis aus wirksam sind, kann ihre Höhe gering gehalten werden.

Die Kontaktstellen für die Schutzstecker liegen nahe bei den Schneidklemmen für die selten zu ändernden Leitungen. Die Federkontakte für die Prüf- bzw. Trennstecker liegen zwischen den Kontaktstellen für den Schutzstecker und den Schneidklemmen für die abgehenden Rangierleitungen. Dadurch kann der Schutzstecker in hinreichendem Abstand zu den Schneidklemmen für die Rangierleitungen gehalten werden, so daß die Anschließvorgänge nicht behindert werden. Damit können die Schneidklemmen für die Rangierleitungen entsprechend niedrig angeordnet werden, so daß sich die Bauhöhe der Verteilerleiste erheblich verringert. Durch die Fixierung der Kontaktteile in einem einzigen Gehäuseteil können die Kontaktteile erheblich einfacher montiert werden. Die Kontaktteile brauchen lediglich von der Rückseite her in die entsprechenden Aufnahmekammern des bedienungsseitigen Gehäuseteils eingeschoben werden. Ein deckelartiges Gehäuserückteil hat lediglich eine Verschlußfunktion.

Durch die Weiterbildung der Erfindung nach Anspruch 2 überdeckt der Schutzstecker nicht nur die selten benötigten Schneidklemmen sondern auch den zugehörigen Verdrahtungsraum für die entsprechenden Kabeladern. Damit wird genügend Raum zum Anschließen der Rangierleitungen bzw. zum Anschalten eines Prüfsteckers neben dem Schutzstecker geschaffen.

Durch eine andere Weiterbildung der Erfindung nach Anspruch 3 kann sich der Prüfstecker in voller Breite an der Verteilerleiste abstützen, wodurch die Steckkontaktstellen weniger belastet werden.

Im folgenden wird die Erfindung anhand eines in der Zeichnung dargestellten Ausführungsbeispieles näher erläutert.

Es zeigen
- Fig. 1: eine Draufsicht auf eine Verteilerleiste mit angeschlossenen Leitungen,
- Fig. 2: einen vergrößerten Schnitt durch die Verteilerleiste entlang der Linie II-II in Figur 1,
- Fig. 3: eine Draufsicht auf Kontaktteile der Verteilerleiste nach Figur 2,
- Fig. 4: einen Teilschnitt durch die Verteilerleiste nach Figur 2 mit abgeänderten Kontaktteilen.

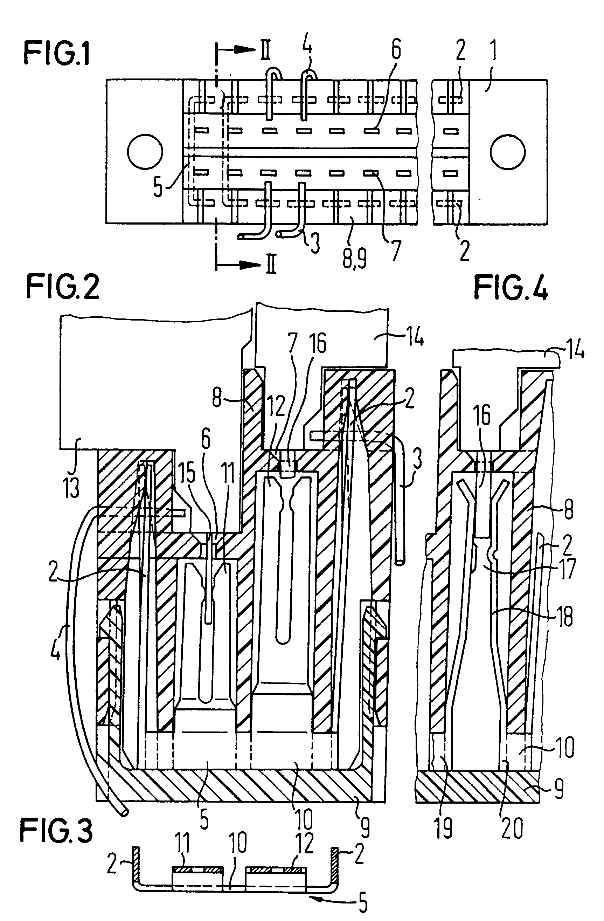

Nach Figur 1 weist eine längliche Verteilerleiste 1 Schneidklemmen 2 auf, die auf einer Bedienungsseite der Verteilerleiste 1 entlang der beiden Längsseiten angeordnet sind. An die Schneidklemmen 2 sind z. B. von Teilnehmern ankommende rangierbare Leitungen 3 und z. B. zu einer Vermittlungseinrichtung führende abgehende Leitungen 4 angeschlossen. Jeweils eine Schneidklemme 2 für eine ankommende Leitung 3 und eine gegenüberliegende Schneidklemme 2 für eine abgehende Leitung 4 sind Bestandteile eines einstückigen Kontaktteils 5. Dieses ist durch Steckeröffnungen 6, 7 in einem Gehäuse 8, 9 der Verteilerleiste 1 für Schutz- und Prüfstecker zugänglich.

Nach den Figuren 2 und 3 besteht das Gehäuse aus einem bedienungsseitigen Frontteil 8 und einem deckelartigen Rückteil 9. Das Frontteil 8 ist mit zum Rückteil 9 hin offenen Aufnahmekammern für die Kontaktteile 5 versehen. Diese können durch einfaches Einstecken von der Rückseite her in das Frontteil 8 eingesetzt werden und sind in diesem vollständig aufgenommen und lagerichtig gehalten. Die Kontaktteile 5 stehen hochkant und senkrecht auf dem Rückteil 9, das mit dem Frontteil 8 verrastet ist. Zwischen den Schneidklemmen 2 weisen die Kontaktteile 5 entlang dem Rückteil 9 einen Basisabschnitt 10 auf, der die Schneidklemmen 2 miteinander verbindet. Die Schneidklemmen 2 sind durch Abbiegen um 90° parallel zur Längsrichtung der Verteilerleiste 1 gestellt. Vom Basisabschnitt 10 aus ragen zusätzlich zu den Schneidklemmen 2 freigeschnittene gabelförmige Steckkontakte 11 und 12 für Schutzstecker 13 und Prüfstecker 14. Die Steckkontakte 11 und 12 stehen quer zur Längsrichtung der Verteilerleiste 1 und parallel zum Basisabschnitt 10. Sie sind durch eine Abkröpfung auf die Mitte der Schneidklemmen 2 ausgerichtet. Dies erleichtert die visuelle Zuordnung der Stecker zu den Schneidklemmen 2. Die Steckkontakte 11 eignen sich auch zum Anschalten eines Kabelsteckers.

Der Schutzstecker 13 ist mit Steckzungen 15 versehen, die zwischen die federnden Schenkel der Steckkontakte 11 eingesteckt sind. Die Steckzungen 15 sind außermittig am Schutzstecker 13 angeordnet. Dieser überdeckt die Schneidklemmen 2 für die abgehenden Leitungen 4 und überragt längsseitig die Anschlußleiste 1 um die Breite eines Verdrahtungsraums für die abgehenden Leitungen 4. Der Prüfstecker 14 ist ebenfalls mit Steckzungen 16 versehen, die zwischen die federnden Schenkel des Steckkontakts 12 eingesteckt sind. Die Steckzungen 16 sind ebenfalls außermittig zum Schutzstecker 13 hin versetzt angeordnet. Da durch ist es möglich, die Steckkontakte 11 und 12 einander eng benachbart anzuordnen, so daß die Gesamtbreite der Verteilerleiste gering gehalten werden kann. Der Schutzstecker 13 und der Prüfstecker 14 sind einander eng benachbart Rücken an Rücken angeordnet. Der Prüfstecker 14 überdeckt die zugehörigen Schneidklemmen 2 für die z. B. von den Teilnehmern ankommenden Leitungen 3. Diese können als Rangierleitungen ausgebildet sein, die zu einem anderen Bereich des Verteilers führen. Da Leitungsprüfungen und Verdrahtungsänderungen nicht gleichzeitig vorgenommen werden können, können die Prüfstecker beim Anschließen der Schaltdrähte gezogen werden.

Nach Figur 4 sind die Steckkontakte 12 (Figur 2) durch Trennkontakte 17 ersetzt, die durch die Steckzungen 16 des Prüfsteckers 14 getrennt sind. Anstelle der Steckzungen 16 des Prüfsteckers 14 können auch die Steckzungen eines Trennsteckers zwischen die Trennkontakte 17 geschoben werden, um die Verbindung zu unterbrechen. Bei herausgezogenen Steckern sind die Trennkontakte 17 geschlossen. Die Kontaktteile 19, 20 sind zweistückig ausgebildet und bei gezogenen Steckern über den Trennkontakt 17 miteinander verbunden. Die Trennkontakte 17 weisen zwei in der Längsrichtung der Verteilerleiste 1 abgebogene Federschenkel 18 auf, die annähernd parallel zu den Schneidklemmen 2 stehen. Die Federschenkel 18 sind so ausgebildet, daß sie in demselben Gehäuse wie die Steckkontakte 12 für den Schutzstecker 14 aufgenommen werden können.

## Patentansprüche

1. Verteilerleiste für eine Telekommunikations-, insbesondere Fernsprechanlage, wobei die längliche, quaderförmige Verteilerleiste (1) mit in der Längsrichtung aneinandergereihten Kontaktteilen (5, 19, 20) versehen ist, die paarweise entlang der Längsseiten der Verteilerleiste (1) gegenüberliegende Schneidklemmen (2) für ankommende und abgehende Leitungen (3 und 4) und Steckkontakte (11) für Schutzstecker (13) und zusätzliche Steckkontakte (12, z. B. 17) für Prüfstecker (14) oder Trennstecker aufweisen, wobei die Schneidklemmen (2) und Steckkontakte von einer Bedienungsseite der Verteilerleiste (1) her zugänglich sind und in der Draufsicht auf die Bedienungsseite nebeneinander angeordnet sind und wobei sich die Ebenen der Schneidklemmen (2) parallel zu den Längsseiten der Verteilerleiste (1) erstrecken,
**dadurch gekennzeichnet,**
daß die Kontaktteile (5, 19, 20) auf der der Bedienungsseite abgewandten Rückseite Basisabschnitte (10) aufweisen, die die Schneidklemmen (2) und die Steckkontakte (11, 12, z. B. 17) miteinander verbinden, daß die Basisabschnitte (10) in gleicher Höhe über der Rückseite zu dieser senkrecht stehend angeordnet sind, daß die Steckkontakte (11, 12, 17) und Schneidklemmen (2) von den Basisabschnitten (10) aus in Richtung der Bedienungsseite ragen und daß die Kontaktteile (5, 19, 20) im wesentlichen in einem bedienungsseitigen Frontteil (8) eines Gehäuses (8, 9) der Verteilerleiste (1) aufgenommen und gehalten sind.

2. Verteilerleiste nach Anspruch 1,
**dadurch gekennzeichnet,**
daß der Schutzstecker (13) im wesentlichen über den Schneidklemmen (2) für die selten zu ändernden z. B. zu einer Vermittlungseinrichtung abgehenden Leitungen (4) angeordnet ist und die Längsseite der Verteilerleiste (1) seitlich überragt.

3. Verteilerleiste nach Anspruch 1 oder 2,
**dadurch gekennzeichnet,**
daß der Prüfstecker (14) die Schneidklemmen (2) für die häufig zu ändernden z. B. von den Teilnehmern ankommenden Leitungen (3) überdeckt.

## Claims

1. Distribution strip for a telecommunications installation, preferably a telephone exchange, the elongated, parallelepiped distribution strip (1) being provided with contact parts (5, 19, 20) which are arranged in a row in the longitudinal direction, have insulation-piercing terminals (2), which are located opposite one another in pairs along the longitudinal sides of the distribution strip (1), for incoming and outgoing lines (3 and 4), and have plug contacts (11) for protective plugs (13) and additional plug contacts (12, for example 17) for test plugs (14) or interruptor plugs, the insulation-piercing terminals (2) and the plug contacts being accessible from an operating side of the distribution strip (1) and being arranged side-by-side in plan view of the operating side, and the planes of the insulation-piercing terminals (2) extending parallel to the longitudinal sides of the distribution strip (1), characterized in that the contact parts (5, 19, 20) have on the rear side facing away from the operating side base sections (10) which connect the insulation-piercing terminals (2) and the plug contacts (11, 12, for example 17) to one another, in that the base sections (10) are arranged at the same height above the rear side, positioned vertically with respect thereto, in that the plug contacts (11, 12, 17) and insulation-piercing terminals (2) project from the base sections (10) in the direction of the operating side, and in that the contact parts (5, 19, 20) are essentially accommodated and held in a front part (8), on the operating side, of a housing (8, 9) of the distribution strip (1).

2. Distribution strip according to Claim 1, characterized in that the protective plug (13) is essentially arranged above the insulation-piercing terminals (2) for the lines (4) which have to be changed rarely, for example outgoing lines to a switching device, and overhangs the longitudinal side of the distribution strip (1) at the sides.

3. Distribution strip according to Claim 1 or 2, characterized in that the test plug (14) covers the insulation-piercing terminals (2) for the lines which have to be changed frequently, for example incoming lines from the subscribers.

## Revendications

1. Barrette de distribution pour une installation de télécommunications, notamment une installation téléphonique, la barrette de distribution (1) oblongue et parallélépipédique étant munie de pièces de contact (5,19,20), qui sont rangées les unes à côté des autres dans la direction longitudinale et qui comportent, par couples, le long des côtés longitudinaux de la barrette de distribution (1), des bornes à déplacement d'isolant (2), montées en vis-à-vis, pour des lignes (3 et 4) d'arrivée et de départ, des contacts à enfichage (11) pour des connecteurs de protection (13), et des contacts à enfichage supplémentaires (12, par exemple 17) pour des connecteurs de contrôle (14) ou pour des connecteurs de séparation, les bornes à déplacement d'isolant (2) et les contacts à enfichage étant accessibles à partir d'un côté de commande de la barrette de distribution (1) et étant disposés côte-à-côte, selon une vue en plan, sur le côté de commande, tandis que les plans des bornes à déplacement d'isolant (2) sont parallèles aux côtés longitudinaux de la barrette de distribution,
caractérisée par le fait
que les pièces de contact (5,19,20) comportent, sur le côté arrière tourné à l'opposé du côté de commande, des parties de base (10), qui relient entre eux les bornes à déplacement d'isolant (2) et les contacts à enfichage (11,12, par exemple 17), que les parties de base (10) sont disposées à un même niveau au-dessus de la face arrière et perpendiculairement à cette dernière, que les contacts à enfichage (11,12,17) et les bornes à déplacement d'isolant (2) fait saillie des parties de base (10) en direction du côté de commande et que les pièces de contact (5,19,20) sont logées et retenues essentiellement dans une partie avant (8), située du côté de commande, d'un boîtier (8,9) de la barrette de distribution (1).

2. Barrette de distribution suivant la revendication 1, caractérisée par le fait que le connecteur de protection (13) est disposé sensiblement au-dessus des bornes à déplacement d'isolant (2) pour les lignes (4) qui doivent être rarement modifiées et qui partent par exemple en direction d'un dispositif de commutation, et le côté longitudinal de la barrette de distribution (1) fait saillie latéralement.

3. Barrette de distribution (3) suivant la revendication 1 ou 2, caractérisée par le fait que le connecteur de contrôle (14) recouvre les bornes à déplacement d'isolant (2) prévues pour les lignes (3) qui doivent être fréquemment modifiées et qui viennent par exemple des abonnés.
